**Europäisches Patentamt**

**European Patent Office**

**Office européen des brevets**

(19)

(11) Veröffentlichungsnummer: **0 061 681**
**A2**

(12) # EUROPÄISCHE PATENTANMELDUNG

(21) Anmeldenummer: **82102321.5**

(22) Anmeldetag: **20.03.82**

(51) Int. Cl.³: **H 04 N 1/36**

(30) Priorität: **28.03.81 DE 3112412**

(43) Veröffentlichungstag der Anmeldung:
**06.10.82 Patentblatt 82/40**

(84) Benannte Vertragsstaaten:
**FR GB IT NL**

(71) Anmelder: **DR.-ING. RUDOLF HELL GmbH**
**Grenzstrasse 1-5**
**D-2300 Kiel 14(DE)**

(72) Erfinder: **Bernitt, Jürgen**
**Seestrasse 10**
**D-2355 Wankendorf(DE)**

(54) **Einrichtung zur positionsgenauen Phasenzeichenerzeugung bei Faksimilegeräten.**

(57) Einrichtung zur positionsgenauen Phasenzeichenerzeugung bei Faksimilegeräten mit einer auf der Trommel des Abtastgerätes befindlichen ortsfesten Marke zur Ableitung des Phasenzeichens. In der Figur ist die ortsfeste Marke (3) auf der Abtasttrommel (1) außerhalb des Vorlagenabtastbereichs (2) angeordnet und wird vor der Vorlagenabtastung nach dem Start des Gerätes von dem Abtastorgan (4) erfaßt. Mit der Trommel ist eine Taktscheibe (6) verbunden, die zusammen mit einem ihr zugeordneten Sensor (7) einen Taktgenerator bildet und eine auf den Trommelumfang abgestimmte Anzahl von Impulsen liefert. Durch eine Decodiereinrichtung (10) werden die der Lage der Marke entsprechenden Impulse bei jeder Trommelumdrehung als Phasenzeichen auscodiert.

Fig. 1

-1-

Beschreibung der Erfindung

Einrichtung zur positionsgenauen Phasenzeichen-
Erzeugung bei Faksimilegeräten

Technisches Gebiet

Die vorliegende Erfindung betrifft eine Einrichtung
zur positionsgenauen Phasenzeichenerzeugung bei
Faksimilegeräten gemäß dem Oberbegriff des Patentanspruchs 1.

Zugrundeliegender Stand der Technik

Bei Faksimilegeräten, z. B. Bürofernkopierern oder
Wetterkartenübertragungsgeräten, wird vom Sender
ein Phasenzeichen ausgesendet, das vom Empfänger
als solches erkannt und zur Einphasung des
Empfängers auf den Sender ausgewertet wird. Bei
sogenannten Trommelgeräten, bei denen sowohl auf
der Abtastseite, d. h. der Sendeseite, als auch
auf der Aufzeichnungsseite, d. h. der Empfangsseite, Trommeln zur Originalabtastung und -Wiederaufzeichnung verwendet werden, wird am Abtastgerät
bei jeder Trommelumdrehung eine ortsfeste Marke
abgetastet und zum Empfänger übertragen. Die

- 2 -

genauen Impulslängen und Impulsabstände sind in der CCITT-Norm, Recommendation T3, angegeben. Hierbei bestimmt das Phasenzeichen, wie bereits erwähnt, die Einphasung des Empfängers und auch die Fläche auf der Empfangstrommel, die beschrieben wird. Um Informationsverluste kleinzuhalten, muß die Position des Phasenzeichens zur Trommel eng toleriert werden, was einen Aufwand an Justierung verlangt und es muß eine zusätzliche Abtasteinheit zur Erkennung des Phasenzeichens vorhanden sein.

Offenbarung der Erfindung

Der vorliegenden Erfindung liegt daher die Aufgabe zugrunde, eine verbesserte und exakt positionsgenau arbeitende Einrichtung zur Erzeugung des Phasenzeichens anzugeben.

Kurze Beschreibung der Zeichnungen

Die Erfindung erreicht dies durch die im kennzeichnenden Teil des Anspruchs 1 angegebenen Merkmale.

Vorteilhafte Weiterbildungen der Erfindung sind in den Unteransprüchen 2 und 3 angegeben.

Die Erfindung wird im folgenden anhand der Figuren 1 - 6 näher erläutert. Es zeigen:

Figur 1 ein Prinzipschaltbild der Erfindung,

Figur 2 ein Ausführungsbeispiel einer Schaltung zur Gewinnung des Phasenzeichens,

- 3 -

Figur 3 eine grafische Darstellung der vom Bildabtaster gelieferten Signale,

Figur 4 eine grafische Darstellung eines von der
Gerätesteuerung bei Start des Gerätes abgegebenen Freigabesignals für die Gewinnung
des Phasenzeichens,

Figur 5 eine grafische Darstellung eines aus den

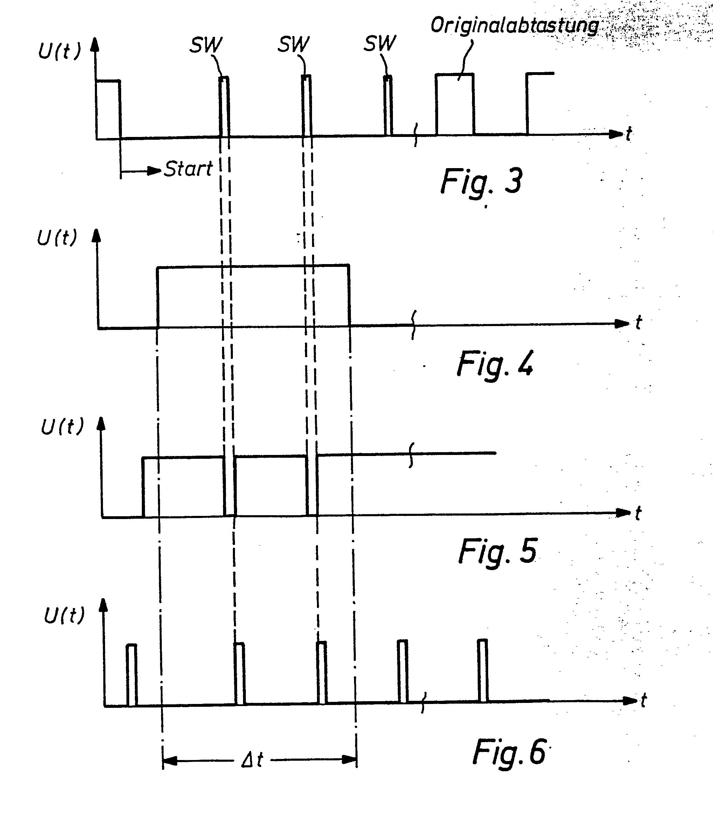

Figuren 3 und 4 gewonnenen Impulses für
die Erzeugung des Phasenzeichens und

Figur 6 eine grafische Darstellung des Phasenzeichens.

Bester Weg zur Ausführung der Erfindung

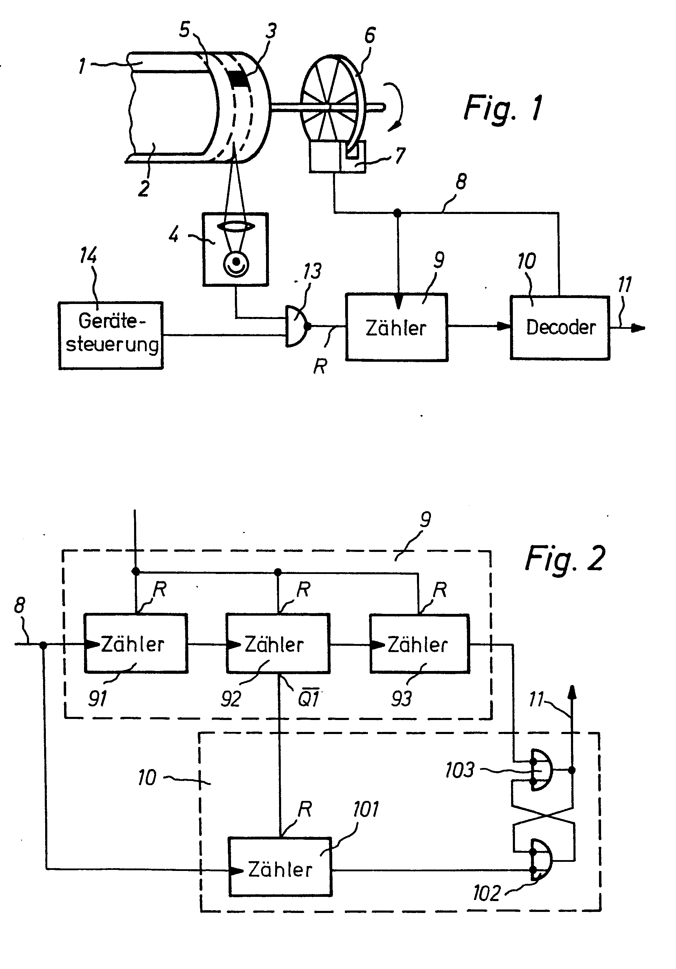

Figur 1 zeigt schematisch eine Abtasttrommel 1
eines auf der Senderseite befindlichen Abtastgerätes, auf der das Original 2 aufgespannt ist.
Auf dieser Trommel ist eine ortsfeste Marke 3 vorhanden, die als genau und einfach herstellbare
Ausnehmung in dem sonst hellen Trommelkörper ausgebildet ist und als Schwarz von einer Abtastoptik
4 erkannt wird. Die Marke 3 liegt vor dem eigentlichen Abtastbeginn des Originals, der durch die
Linie 5 angedeutet ist. Bei der vorliegenden
Erfindung wird die Optik 4, welche zur Originalabtastung dient, für die Erzeugung des Phasenzeichens verwendet, indem sie schon vor der eigentlichen Originalabtastung die Marke 3 abtastet.
Weiterhin ist eine Taktscheibe 6 vorgesehen, die
mechanisch fest mit der Trommel verbunden ist. In
einem Taktgeber 7 erzeugt diese Taktscheibe 6 Signale, die synchron mit der Trommeldrehung sind und über eine Leitung 8 an einen rückstellbaren Zähler 9 und einen Decoder 10 für das Phasenzeichen gegeben werden, an dessen Ausgang 11 dann schließlich das Phasenzeichen erscheint. Der Zähler 9 wird über seinen Reset-Eingang R durch das vom Abtaster 4 von der Marke 3 gelieferte Signal über ein invertierendes Und-Tor 13 zurückgesetzt, an dessen anderem Eingang ein von der Gerätesteuerung, im vorliegenden Fall von einem Mikroprozessor geliefertes Freigabesignal, das bei Start der Trommel abgegeben wird, anliegt. Die Rücksetzung des Zählers 9 durch das von der Marke gewonnene Signal erfolgt nur zu dem vom Mikroprozessor 14 freigegebenen Zeitpunkt kurz nach dem Anlauf der Trommel und bevor die Bildabtastung beginnt. Danach läuft der Zähler 9 immer wieder automatisch hoch, gesteuert von den Takten der Rasterscheibe. Ein Zählerdurchlauf entspricht hierbei genau der Anzahl der Striche auf der Rasterscheibe, im vorliegenden Falle etwa 350. Zu Beginn jedes Zeilendurchlaufs wird dann mit Hilfe des Decodierers 10 das Phasenzeichen mit etwa 5 % eines Trommelumfangs auscodiert. Dieser Vorgang erfolgt dann automatisch, nachdem der Abtaster 4 die Marke verlassen hat und in die eigentliche Vorlagenabtastung eintritt. Durch die Abtastung dieser Marke hat das Phasenzeichen zu Beginn der Abtastung die genaue Position zur Trommel bekommen und verändert seine Lage während dieser Übertragung nicht mehr.

Auf der Aufzeichnungsseite wird das Phasenzeichen noch dazu benutzt, den Bildausschnitt zu bestimmen, d. h. den Bereich anzugeben, in dem eine Auf-

- 5 -

zeichnung erfolgen soll, damit das Aufzeichnungsorgan nicht auch in der Totzeit, d. h. der Zeit
zwischen Anfang und Ende des Aufzeichnungsträgers,
auf die leere Trommel aufzeichnet.

Figur 2 zeigt die eigentliche Impulsauswerteschaltung. Die von der Leitung 8 angelieferten
Signale der Taktscheibe 6 gehen an den Zähler 9,
der aus den Zählern 91, 92 und 93 besteht. Im vorliegenden Falle weist die Taktscheibe 6 350
Markierungen auf, d. h., es entfallen auf eine
Trommeldrehung 350 Takte. Die Zähler 91, 92 und 93
sind so kaskadiert, daß sie insgesamt bis 350
zählen, d. h., der Zähler 91 zählt bis 10, der
Zähler 92 ist auf 7 und der Zähler 93 auf 5 eingestellt. Die Zähler sind an ihren Reset-Eingängen
miteinander verbunden und an das Tor 13 angeschlossen. Dies bedeutet, daß die Zählkette aus den
Zählern 91 bis 93 bei jeder Trommeldrehung bis 350
zählt. Zur Gewinnung des Phasenzeichens ist, wie
bereits in Figur 1 erwähnt, der Decoder 10 vorhanden. Er besteht aus einem weiteren Zähler 101 und
aus einem von den Toren 102 und 103 gebildeten
RS-Flip-Flop. Der Reset-Eingang des Zählers 101 ist
mit dem $\overline{Q1}$-Ausgang des Zählers 92 verbunden, wobei
an dem $\overline{Q1}$-Ausgang nach dem 10. Impuls der Taktscheibe 6 ein Impuls erscheint, der den Zähler 101
nach dem 10. Impuls der Taktscheibe zurückzählt.
Der Zähler 101 startet dann und zählt weitere
Impulse der Taktscheibe 6 hinzu, da er über die
Leitung 8 mit der Taktscheibe verbunden ist. Der
Zähler 101 ist auf 7 eingestellt, d. h., nachdem er
selbst 7 Impulse weitergezählt hat, gibt er einen
Impuls auf das RS-Flip-Flop 102, 103 ab. Dieser

- 6 -

Impuls ist insgesamt der 17. Impuls vom Start des Zählers 91. Die Gesamtzahl der von der Taktscheibe erzeugten Impulse beträgt 350 und die Anzahl von 17 Impulsen, die auf das RS-Flip-Flop 102, 103 gegeben werden, entspricht 5 % dieser Anzahl, d. h., der durch die CCITT-Norm vorgegebenen 5 % vom Trommelumfang, die für das Phasenzeichen verwendet werden. Wie leicht einzusehen ist, wird das Flip-Flop 102, 103 jeweils von dem 17. und von dem 350. Impuls von einer Lage in die andere geschaltet, d. h., es wird am Ende jeder Trommelumdrehung das Flip-Flop 102, 103 gesetzt und nach dem 17. Impuls ein Umkippen des Flip-Flops durch den Zähler 101 bewirkt. Die Einphasung dieses Zählvorgangs auf die ortsfeste Marke 3 auf der Trommel wird im folgenden anhand der Figuren 3 - 6 näher dargelegt.

Figur 3 zeigt die von der Abtastoptik 4 vom Beginn des Trommelstarts abgegebenen Signale. Die ersten 3 Impulse SW sind jeweils die von der Optik erkannte ortsfeste Marke 3 auf der Trommel. Nachdem der Abtaster die Marke verlassen hat und die Vorlage 2 abtastet, liefert er das eigentliche Bildsignal für die Bildübertragung, das in Figur 3 auf der rechten Seite dargestellt und mit Originalabtastung bezeichnet ist.

Figur 4 zeigt einen von der Gerätesteuerung, d. h. vom Mikroprozessor 14 abgegebenen Freigabeimpuls zu Beginn der Abtastung, der zusammen mit den vom Abtaster gelieferten Impulsen SW eine Durchhaltung des Tors 13 bewirkt, wodurch der Zähler 9 auf 0 gesetzt wird. In Figur 5 sind diese Nullsetzimpulse, d. h. die Ausgangsimpulse des Tors 13, dargestellt.

Wie hieraus zu ersehen ist, erfolgt zum Beginn der Abtastung jeweils eine Nullsetzung des Zählers 9 dann, wenn Koinzidenz zwischen dem Markenabtastsignal und dem Freigabesignal, das von der Gerätesteuerung kommt, besteht. Hierdurch ist also ein ortsgenaues Starten des Zählers 9 garantiert, und der einmal so eingephaste Start des Zählers 9 bleibt über die ganze Übertragungszeit erhalten, da die Taktscheibe ortsfest mit der Trommel verbunden ist und die Anzahl der Impulse der Taktscheibe exakt auf den Trommelumfang abgestimmt ist.

Figur 6 zeigt schließlich das von dem RS-Flip-Flop 102, 103 abgegebene Phasenzeichen, dessen Dauer, wie bereits zur Figur 2 erläutert wurde, jeweils 5 % des Trommelumfangs beträgt.

Gewerbliche Verwertbarkeit

Bürofernkopierer, Telebildgeräte, Wetterkartenübertragung, Faksimiletechnik.

-1-

Gegenstand der Erfindung

Patentansprüche

1. Einrichtung zur positionsgenauen Phasenzeichenerzeugung bei Faksimilegeräten mit einer auf der Trommel des Abtastgerätes befindlichen ortsfesten Marke zur Ableitung des Phasenzeichens, dadurch gekennzeichnet, daß die ortsfeste Marke auf der Abtasttrommel außerhalb des Vorlagenabtastbereichs liegt und vor der Vorlagenabtastung nach dem Start des Gerätes von dem Abtastorgan erfaßbar ist, daß mit der Trommel eine Taktscheibe verbunden ist, die zusammen mit einem ihr zugeordneten Sensor einen Taktgenerator bildet und eine auf den Trommelumfang abgestimmte Anzahl von Impulsen liefert, daß ein auf die Anzahl der Impulse abgestimmter Zähler vorhanden ist, daß dieser Zähler mit seinem Zähleingang mit dem Taktgeber und mit seinem Reset-Eingang mit dem Abtastorgan über ein Und-Tor verbunden ist, dessen zweiter Eingang mit der Gerätesteuerung verbunden ist, durch die nach dem Start des Gerätes vor der Vorlagenabtastung ein Freigabeimpuls auf das Und-Tor abgebbar ist, durch den der Zähler mittels des von dem Abtaster gelieferten von der Marke gewonnenen Signals auf 0 setzbar ist und

- 2 -

daß eine mit dem Zählerausgang und dem Taktgenerator verbundene Decodiereinrichtung vorhanden ist, mit deren Hilfe die der Lage der Marke entsprechenden Impulse bei jeder Trommelumdrehung als Phasenzeichen auscodierbar sind.

2. Einrichtung nach Anspruch 1, dadurch gekennzeichnet, daß die Decodiereinrichtung aus einem weiteren mit dem ersten Zähler und dem Taktgenerator verbundenen Zähler besteht, der auf die Anzahl Impulse eingestellt ist, aus denen das Phasenzeichen gebildet wird und der ausgehend vom Nullsetzen des ersten Zählers nach jeder Trommeldrehung die das Phasenzeichen ergebenden Impulse auszählt.

3. Einrichtung nach Anspruch 2, dadurch gekennzeichet, daß der weitere Zähler an einen Eingang eines RS-Flip-Flops angeschlossen ist, dessen anderer Eingang mit dem Ausgang des ersten Zählers verbunden ist.

Fig. 1

Fig. 2

Fig. 3

Fig. 4

Fig. 5

Fig. 6